(19) Europäisches Patentamt
European Patent Office
Office européen des brevets

(11) **EP 2 834 672 B1**

(12) **EUROPEAN PATENT SPECIFICATION**

(45) Date of publication and mention
of the grant of the patent:
**17.05.2017 Bulletin 2017/20**

(21) Application number: **12745617.6**

(22) Date of filing: **29.06.2012**

(51) Int Cl.:
***G01V 1/28*** (2006.01)

(86) International application number:
**PCT/CZ2012/000058**

(87) International publication number:
**WO 2014/000718 (03.01.2014 Gazette 2014/01)**

(54) **METHOD DISCRIMINATING BETWEEN NATURAL AND INDUCED SEISMICITY**

VERFAHREN ZUR UNTERSCHEIDUNG ZWISCHEN NATÜRLICHER UND INDUZIERTER SEISMIK

PROCÉDÉ PERMETTANT D'ÉTABLIR UNE DISTINCTION ENTRE LA SISMICITÉ NATURELLE ET
LA SISMICITÉ INDUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.02.2015 Bulletin 2015/07**

(73) Proprietors:
• **Seismik s.r.o.**
**182 00 Praha 8, Liben (CZ)**
• **Ústav Struktury A Mechaniky Hornin AV CR, V.V.I.**
**182 09 Praha 8 (CZ)**

(72) Inventors:
• **EISNER, Leo**
**190 00 Praha 9 (CZ)**
• **OPRSAL, Ivo**
**74 241 Senov u N. Jicína (CZ)**

(74) Representative: **Hak, Roman**
**Hak, Janecek & Svestka**
**Patent and Trademark Attorneys**
**U Pruhonu 5**
**170 00 Praha 7 (CZ)**

(56) References cited:
**WO-A1-01/59481      US-A1- 2011 066 380**

• **SIMONE CESCA ET AL: "Discrimination of
induced seismicity by full moment tensor
inversion and decomposition", JOURNAL OF
SEISMOLOGY, vol. 17, no. 1, 22 May 2012
(2012-05-22), pages 147-163, XP055052548, ISSN:
1383-4649, DOI: 10.1007/s10950-012-9305-8**
• **JENNY SUCKALE: "Moderate-to-large seismicity
induced by hydrocarbon production", THE
LEADING EDGE, March 2010 (2010-03), pages
310-319, XP002691692,**

**Description**

Field of the invention

The invention pertains generally to the field of seismicity. Particularly it relates to the seismic monitoring useful in the mining industry or oil and gas extraction industry. It also has applications in the seismic exploration for underground water reservoirs as well as the global issue of $CO_2$ sequestration. Specifically, the present invention relates to the method that provides objective criteria to determine temporal association of seismicity and various types of human activity, particularly associated with mining industry.

Background of the invention

It is a known fact that fluid injection or withdrawal from rock formation can induce or trigger seismic activity. However, natural seismicity also occurs in regions where the production sites are placed. The currently used methods and associated data processing lead to obtaining statistically significant correlation even for independent (random) data indicating incorrectly causal connection where no connection is present.

Proving or disproving causal relationship between seismicity and human activity is difficult. One of the key aspects of proving causal relationship is temporal relations, where human activity precedes seismicity and increase of human activity causes increase of seismicity. Such relationship can be used by operating companies, authorities or insurances to take appropriate action. The seismicity, potentially connected to the production-well treatment, may be threat to households and infrastructure with relatively strong societal impact.

Qualitative correlation between seismicity and injection volumes has been seen in many well documented cases of triggered or induced seismicity from fluid injection at depth (Healy et al, 1968). Recently, direct values of normalized cross-correlation have been used by Horton (Horton 2012). The disadvantage of such approach is that two positive non zero mean time series exhibit high cross correlation values for non-zero lag with limit equal to 1 for large mean and low standard deviation values. Such approach does not indicate the causal connection between the two time series.

The method that enables to provide an objective determining whether the seismic activity (seismicity) occurring within a certain area is induced or triggered by industrial mining/extraction activity or whether the seismicity is naturally occurring is strongly needed in the branch of industry. The present inventors have recently proposed (Oprsal and Eisner, 2012) to use 'useful function' by removing running mean. However, present invention discloses significant improvement on the method based on removal of the running mean and other adjustments.

Summary of the invention

The inventors of the present invention discovered how to obtain objective criteria for decision when determining whether the seismic activity (seismicity) occurring within a certain area is induced (or triggered) by human activity (e.g. geophysical treatment) associated particularly with mining/extracting industry, such as injection or production of fluids such as brine or gas injection, or whether the recorded seismicity is naturally occurring. Hereby the term 'induced' seismicity involves also term 'triggered' seismicity.

The essence of the invented method lies in the providing of objective criteria to determine temporal association of seismicity and human activity. The result is given by logical YES/NO answer to a question 'are the seismicity and human activity statistically independent?' The answer is not obvious even in case of large amount of various data acquired during the treatment (see below), and the up-to-date scientific literature does not give clear answer to such question and the. The injection into a well is not the only case of application. Generally, any subterranean activity such as mining, strip mining, gas production or even natural one, such as freshwater sinkhole fill can induce seismic activity. The method, according to the present invention, enables to distinguish whether seismicity is temporarily related to human technical activity (e.g. injection treatment) or to any natural process. It is based on analyzing the seismicity measure of human activity (for example well treatment data) and on further data processing.

Recently, the inventors have proposed (Oprsal and Eisner, 2012) simple methodological improvement using specific treatment of the data before cross correlation is applied with results not reliably applicable (i.e. removing running mean). The new data acquisition and processing method described in the present application allows for statistically significant (thus reliable) result as a base for decision making.

The method requires an acquisition of seismic data by a monitoring system, and processing the acquired data. Data acquisition consists of seismic monitoring network, which are distributed on surface or subsurface and continuously record seismic data. From these records, seismic events are detected and through a process of earthquake location they can be located and their sizes (magnitudes) can be determined.

In this invention, the term 'seismicity' means detected seismic events from certain area (either located or not located). This seismicity together with some measure of human activity (e.g. injection rate, pressure of injected fluids, etc.) is used to process in two combined branches. Each of the branches (divided after human activity and seismicity data acquisition) can be used independently and can lead to decision whether the temporal coherent seismicity is *statistically related* or *independent* on human activities.

In an area where injection is occurring, determining the relationship between the human activity, for example geophysical treatment (quantified by injection rate, for example) and seismicity through cross correlation is used as a tool to investigate the possibility of inducing seismicity. The injection volumes, as well as the seismicity (event count) are both positive functions. While direct cross correlation of such functions does not indicate relationship between two phenomena (giving high cross correlation values even for positive random functions), instead, the cross correlation of their *'effective time functions'* (e.g. original functions with weighted filtered part subtracted) is used. *Normalized cross correlation* (NCC) values for *'effective time functions'* (ETF) may peak at statistically insignificant 0.5 and -0.5 in for unrelated phenomena (i.e. no induced seismicity), while they are positive peaks above 0.5 indicates statistically significant temporal relationship between seismicity and human activity (injection treatment).

The term 'time function' means any measured and recorded discrete time history such as (injection-related) injection volumes, wellhead pressure, precipitation, seismic or co-seismic geophysical appearance of limited choice such as number of seismic events with magnitude larger or smaller than given magnitude (mechanism, stress drop or any other parameter) in a given volume (distance, distance interval, depth interval or any other measure); inclination, water spring discharge, geo-electric field, pore pressure, etc. The time function is a digitized discrete representation (with typically regular sampling) of originally continuous value as a function of time.

The term 'cross correlation' is used for a calculated parameter that evaluates similarity among the time functions, the normalized cross correlation has a peak value between -1 and 1.

A very effective tool for computing normalized cross correlation function (NCC) can preferably be found, for example, in MATLAB Signal Processing Toolbox (MathWorks, Natick, Massachusetts, U.S.A.) 'xcorr(A,B,'coeff')'. For using the MATLAB 'xcorr' function to compute NCC, the function input discrete signals are internally normalized to have auto-correlations at zero lag equal to 1.0. The time functions have to be of the same length, or the one with shorter non-zero part is zero padded to meet the interval, where the larger one is non-zero. The 'xcorr' is different from MATLAB Statistics Toolbox's 'corr' that computes correlation. The cross-correlation can be performed for complex analytical signals (where real part is signal, imaginary part is Hilbert transform of the signal). The resulting NCC is a complex function its absolute value can be taken as a measure of temporal correlation. Use of other cross-correlation technique implementation (such as MATLAB 'corr', from definition of correlation coefficients of discrete signals, etc.) does not have influence on the presented method. However, some of the used implementations may differ in the resulting NCC function.

The method according to the present invention comprises some or all of the following steps:

- seismic data are measured as a ground motion caused by earthquake sources by at least one sensor on surface or underground,

- processing of the seismic data enables us to detect microseismic events, in particular to detect their timing and sizes (magnitudes),

- obtaining *the first time function* (e.g. number of earthquakes above certain magnitude per day in an area around the injection well) from previously obtained seismicity by processing the data resulting in earthquake source parameters (location, origin time, i.e. time when event occurred, magnitude, etc.),

- obtaining *the second time function* (e.g., injection rate) from previously obtained human activity data, e.g. geophysical treatment data, such as well head pressure, injection volumes, mined-out volume from human technical activity which may potentially induce the seismicity,

- cross-correlating *time functions* (TF), i.e. *the first time function* and *the second time function,* to obtain normalized cross correlation ($NCC_{TF}$) and normalizing the result with a special normalization coefficient (i.e. theoretically expected NCC, $NCC_{TE}$) derived from time functions themself to obtain newly renormalized cross correlation (RNCC),

- alternatively (or additionally, see further) applying a mathematical transformation to *the first time function* and to *the second time function* to enhance significant temporal variations to obtain *effective time functions* (ETF), i.e. *the first effective time function* and *the second effective time function,* wherein the time functions can be transformed in several possible ways,

- cross correlating *the first effective time function* and *the second effective time function* and obtaining normalized cross correlation ($NCC_{ETF}$) that discriminates temporal resemblance of *effective time functions,*

3

- estimating whether the above obtained cross-correlation ($NCC_{ETF}$ or RNCC) peaks at significantly high value with small temporal delay between the two time functions (i.e. *the first effective time function* and *the second effective time function or the first time function* and *the second time function*), which is indicative that the two are related. Furthermore, the way based on cross-correlating *time functions* (resulting in RNCC) can be combined with the way based on cross-correlating *effective time functions* (resulting in $NCC_{ETF}$) in the way that both cross-correlations are assessed and used for assessing the probability of induced seismicity. This combination enhances the predictive strength of the method.

The preferred way to obtain ETF is transforming the TF into Fourier spectral domain by discrete Fourier transformation (see e.g. WO 2001/059481), multiplying the real and imaginary part of it by a filtering function (FF) and transforming the result back into time domain to obtain ETF. For some specific cases, the ETF can be created by subtracting the mean value from a function. This is known as the Pearson's test. Some other examples of other constructions of the ETFs are:

- High-pass, low-pass or band-pass filtration of a signal in the Fourier domain by arbitrary filter
- Low-pass filtration of a signal in the time domain by subtracting running window average. The window time span depends on time and it can be weighted with weight dependent on time.

Network geometry for measuring the seismic data should be designed to meet the IASPEI manual of observatory practice demands. The basic parametres of a such network are the distance between receivers in the monitoring network and geometry. Data of present regional stations can be used.

A person skilled in the art will understand that various modifications may be made in the invention without departing from the scope of the invention as described in this text and set forth in the appended claims 1-3.

Brief description of the drawings

The present invention will be further described, by way of example, with references to the following drawings.

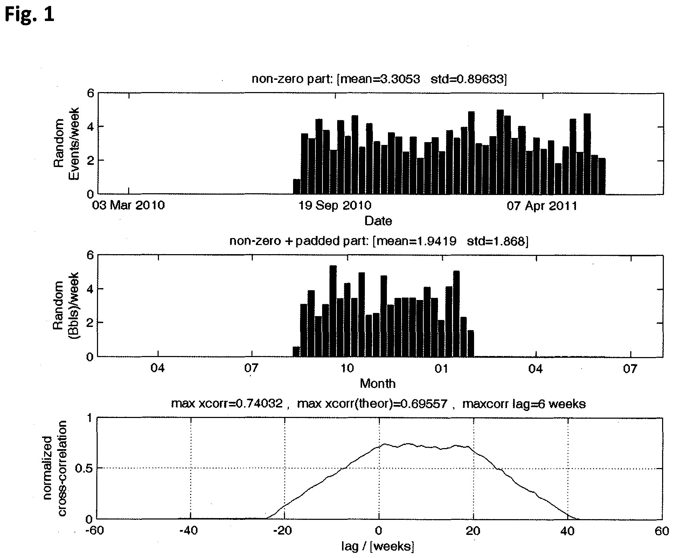

Figure 1: Normalized cross correlation of two random functions, representing weekly data number of earthquakes above magnitude 2 per week. The normalized mean and standard variations decrease due to summation for weekly intervals. The cross correlation plateau value is as shown in Equation 2.

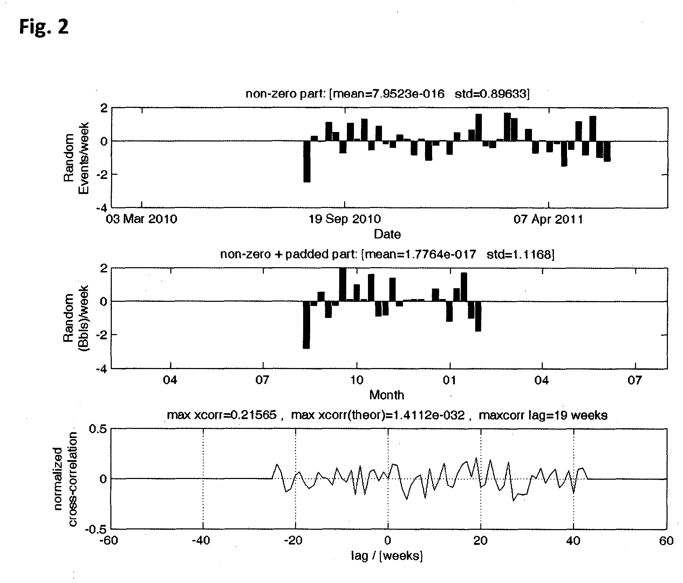

Figure 2: Pearson's cross correlation of weekly data as presented in Figure 1. The mean values of the non-zero-padded parts are subtracted before computing the normalized correlation. For longer series or more realizations (in terms of average), the correlation limits to 0 for independent variables.

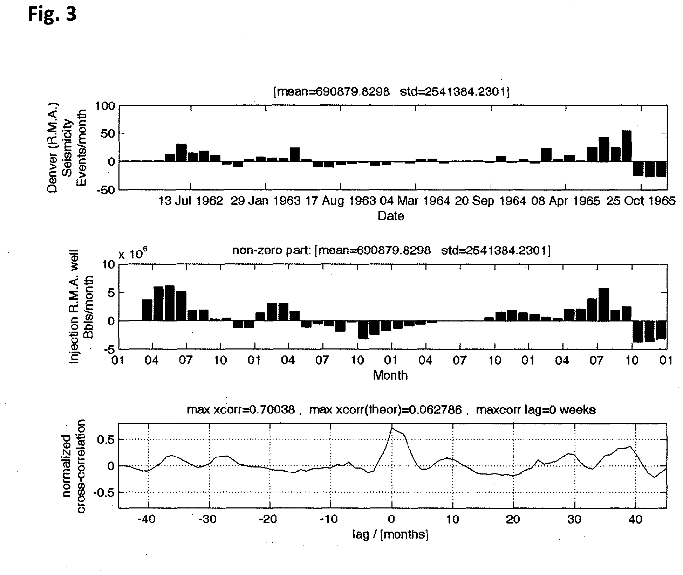

Figure 3: $NCC_{ETF}$ (bottom panel) for *'effective time functions'* (ETF) of *Number of earthquakes larger than given magnitude per month* at the Rocky Mountain Arsenal waste injection (upper panel), and *Injected volume per month* (lower panel) (Data for ETF's taken from Healy et al, 1968). ETF's s are created by filtering in frequency domain with filter=(1-0.85*Sinc(f)), where f=4.8*(1e-8) Hz.

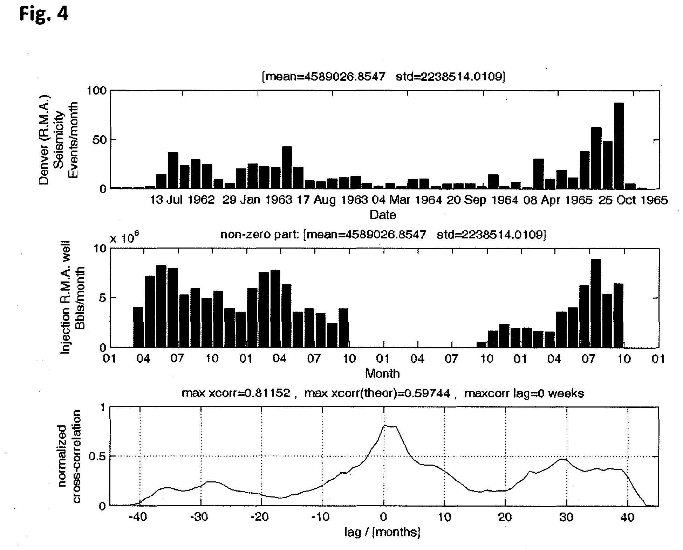

Figure 4: RNCC (bottom panel) for original time functions: *Number of earthquakes* at the Rocky Mountain Arsenal waste injection (upper panel), and *injected volume* (lower panel) (Data of two upper panels taken from Healy et al, 1968).

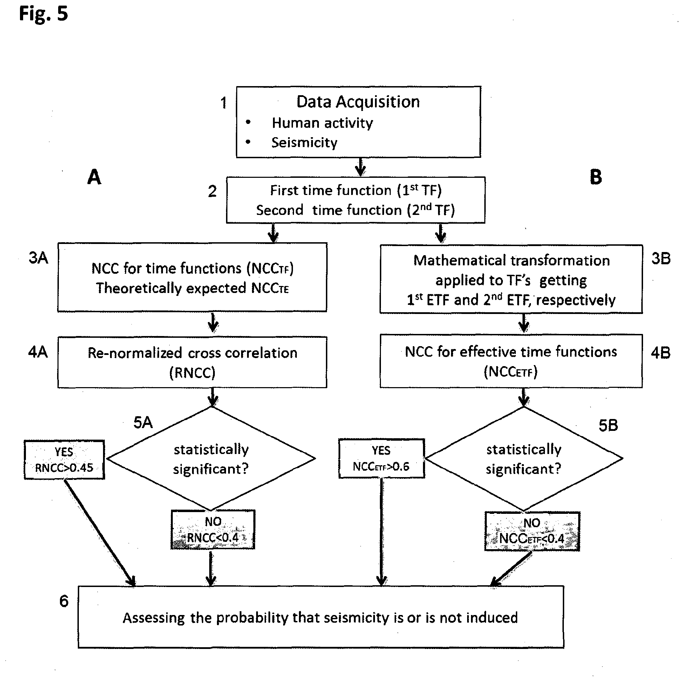

Figure 5: Flowchart describing the method from data acquisition to decision on statistically significant correlation between geophysical activity and related seismicity. The two possible processes, which can be taken independently, work with A: Original data (left panel), and B: Filtered data, respectively. A: Performs the NCC on original data and normalizes it to RNCC for *time functions*. B: Is based on filtering the data to *effective time functions* and performing the NCC estimation resulting in $NCC_{ETF}$.

Detailed description of the invention

The following example provides exemplary embodiment(s) and is not intended to limit a scope, applicability or configuration of the invention.

## 1. Theoretical considerations

Let us investigate the normalized cross correlation of time functions A and B with non-zero means.

$$A = N_A + \mu_A \ , B = N_B + \mu_B$$

Where : $N_A$ is a function of zero mean, $\mu_A$.is mean of A and the respective standard deviation reads

$$E(N_A^2) = \sigma_A^2 \ , E(N_A) = 0 \quad .$$

E(X) is the expected value of X. (Values of B, and B-indexed values apply by analogy). There are plenty of definitions of cross correlation. The normalized cross correlation (as in MATLAB Signal Processing Toolbox, or'reflective correlation', Wikipedia), NCC, reads

$$Corr_n(A,B) = \frac{E(AB)}{\sqrt{E(A^2)E(B^2)}} = \frac{E((N_A + \mu_A)(N_B + \mu_B))}{\sqrt{E((N_A + \mu_A)^2)E((N_B + \mu_B)^2)}}$$

$$= \frac{E(N_A N_B) + \mu_A \mu_B}{\sqrt{(\sigma_A^2 + \mu_A^2)(\sigma_B^2 + \mu_B^2)}} \qquad (1)$$

For independent random functions $N_A$, $N_B$, theoretically expected cross correlation can be calculated as follows:

$$\frac{\mu_A \mu_B}{\sqrt{(\sigma_A^2 + \mu_A^2)(\sigma_B^2 + \mu_B^2)}} = NCC_{TE}(A,B) \qquad (2)$$

Therefore for two functions with non-zero mean the smaller the deviation around that mean the higher the cross-correlation (assuming both means have the same signs).
Hence renormalized cross correlation, RNCC, is defined as:

$$RNCC(A,B) = \frac{Corr_n(A,B) - NCC_{TE}(A,B)}{1 - NCC_{TE}(A,B)}, \qquad (3)$$

Where the denominator re-normalizes maximum value to 1 for perfectly correlated functions.
For time functions with relatively small $\sigma_A$ and $\sigma_B$ and independent functions $N_A$, $N_B$:

$$\lim_{\frac{\sigma_A}{\mu_A}, \frac{\sigma_B}{\mu_B} \to 0,} \left( \frac{\mu_A \mu_B}{\sqrt{(\sigma_A^2 + \mu_A^2)(\sigma_B^2 + \mu_B^2)}} \right) = 1 \qquad (4)$$

For time functions with $\mu_A = \mu_B = 0$:

$$Corr_{n_{zeromeans}}(A,B) = \frac{E(N_A N_B)}{\sigma_A^2 \sigma_B^2} \qquad (5)$$

Only in this case the normalized cross-correlation ranges between -1 and +1 and may indicate physical relationship if close to 1.
MATLAB Statistics Toolbox (MathWorks, Natick, Massachusetts, MA 01760-2098, U.S.A.) was used as a preferred mathematical tool. It is to note that 'xcorr' is different from MATLAB Statistics Toolbox's 'corr' that computes correlation specified in Equation (4). The NCC function from MATLAB Signal Processing Toolbox 'xcorr(A,B,'coeff')' is used. Hence the respective σ and μ apply to the longer of the intervals for both inputs. Formulae (1,2) and (4, 5), giving value of maximum (or plateau) of the cross-correlation, are valid in sense of average of realizations or infinite signal limit, being an estimate for current realization of independent functions (see Figure 1). The theoretical value of NCC, $NCC_{TE}$ (Equation 2, 'max_xcross(theor)' value in all figures) is computed for every signal on presumption of independent series( E(AB)=0). Figure 1 shows random function with non-zero means, and their NCC. The random realization of these two variables is exactly the same, but their statistical features of the latter are computed including the zero-padded interval as in MATLAB. The plateau amplitude is consistent (in average) with the theoretically obtained value of the normalized cross correlation. Had the functions equal length, the envelope of NCC would be triangle. In this case the NCC is a trapezoid with maximum amplitude decreased due to normalization. Note the change of mean value and standard deviation of the second plot of Figure 1 signal from non-zero part expected μ~1/2 and √(1/12)=0.289 due to zero-padding and normalization. The series of Figure 1 are 'weekly' values, where each is of these values created by summation of seven random realizations of two positive (daily values) random functions with boxcar distribution in <0,1> (μ=1/2). If normalized then the mean value of their non-zero parts would remain unchanged while their standard deviation would decrease to √(1/7 1/12)=0.109 following the Central limit theorem.

## 2. Application

### a) Original-data processing

First branch of the method comprising steps 1, 2, 3A-5A and 6 ((Fig. 5) is showing how to treat the non-preprocessed data in the decision process. It is normalization of NCC of the original time functions normalized to theoretically expected NCC of independent time functions, $NCC_{TE}$. The resulting newly normalized cross correlation for time functions RNCC is given in formula 3, wherein NCC for time functions, $NCC_{TF}$, is estimated according to formula 1 and the expected NCC, $NCC_{TE}$, is estimated according to formula 2.

The result given in equation 3 is not obvious because the NCC for random time functions (Fig. 1), and NCC for induced seismicity and injected volumes (Fig. 4) give statistically significant values of NCC peaks 0.764 and 0.81, respectively, without a possibility to distinguish between these two cases. Re-normalizing the theoretically expected values and computed NCC give (again for cases in Figures 1 and 4, respectively) value *RNCC* = 0.136 for random functions (i.e. seismicity is not induced by human technical activity) and *RNCC* = 0.533 for induced-seismicity case.

### b) Transformed-data processing

Another branch of the procedure comprising the steps 1, 2, 3B-5B and 6 (Fig. 5) deals with the time functions that are transformed into effective time functions (ETF) (effective time variations) before the cross correlation is performed. Normalized cross correlation of the ETFs is computed from formula (1) resulting in the $NCC_{ETF}$.

We have found that most effective way to obtain the ETF is transforming the signal into Fourier spectral domain by discrete Fourier transformation, multiplying the real and imaginary part of it by a filtering function FF and transforming the result back into time domain to obtain ETF. Example in Fig. 3 shows single-peak NCC function. The unique peak means that there is only one possible time shift (here approximately zero) to match the ETF's. The single-peak value=0.7 gives a strong indication that the seismicity is induced by the human activity, e.g. geophysical treatment such as production-well treatment.

For some purely random signals with stationary time-windowing statistics, such as constant time-dependent deviation (not being typical earthquake activity case), the ETF can be created by subtracting the mean value from a function. This is known as the Pearson's test. Fig. 2 shows Pearson's test of Fig. 1 data (or the cross correlation of ETF's of Fig. 1 data) with very low NCC (0.21) which would be significantly lower for longer time series or average of multiple random realizations. Some examples of other constructions of the 'effective time functions' are:

- high-pass, low-pass or band-pass filtration of a signal in the Fourier domain by arbitrary filter
- low-pass filtration of a signal in the time domain by subtracting running window average. The window time span depends on time and it can be weighted with weight dependent on time.

If the seismicity present within human activity time span is induced then the $NCC_{ETF}$ has global maximum at approximately zero time corresponding to a short time lag between the two time functions. The value of global maximum is above statistical significance (i.e. above 0.5) and it is positive. Cross correlation without such features implies that the seismicity is not related to the human activity.

**c) Decision process**

After knowing the final results of the A-branch (Fig. 5, step 5A) and/or B-branch (Fig. 5, step 5B), the decision in form of 'seismicity is not induced' or 'seismicity is probably induced' can be made. The decision is based on statistical independence of the time functions as depicted in the bottom parts of the flow chart in Fig. 5. The most suitable threshold values for YES/NO decision which we have found are approximately 0.45 for A-branch process and approximately 0.60 for B-branch process.

The decision threshold values are based on the empirical knowledge, they were calibrated on the time functions of the human-induced seismicity and natural seismicity known from prior art. The person skilled in the art is aware of the fact that the present threshold values are region-dependent and thus are demonstrated as preferred values in the specific examples. The skilled person also knows the routine approach how to test/calibrate the threshold values useful for realization of the present invention. The same applies to the final decisions which are influenced by the current knowledge of pertinent geophysical processes and by obtained data accuracy. Hence the skilled person is aware that final answer 'Seismicity is induced' is not given with 100% of probability.

Both process branches A and B can be used jointly to provide combined statistical significance decision (Fig. 5). There are ten possible combinations of answers from branches A and B:

| Answer from branch A | Answer from branch B | Final (combined) decision |
| --- | --- | --- |
| YES | YES | 'Seismicity IS induced' |
| undetermined | YES | 'Seismicity IS probably induced' |
| YES | undetermined | 'Seismicity IS probably induced' |
| undetermined | NO | 'Seismicity IS NOT probably induced' |
| NO | undetermined | 'Seismicity IS NOT probably induced' |
| YES | NO | 'Probable cause of seismicity is unclear' |
| NO | YES | 'Probable cause of seismicity is unclear' |
| NO | NO | 'Seismicity IS NOT induced' |
| YES | NO | 'Probable cause of seismicity is unclear' |
| NO | YES | 'Probable cause of seismicity is unclear' |

The anwers then determine whether the seismicity is probably induced, probably not induced, or that the relationship is not statistically significant. The term 'undetermined' stands for situation in Fig 5, steps 5A or 5B, when statistical sicnificancy is between two threshold values for ‚YES' and ‚NO' answers, respectively.

**References**

Healy, J.H., W.W. Rubey, D.T. Griggs, C.B. Raleigh (1968). The Denver Earthquakes, Science, 161, no. 3848, 1301-1310.

Horton, S. (2012). Disposal of Hydrofracking Waste Fluid by Injection into Subsurface Aquifers Triggers Earthquake Swarm in Central Arkansas with Potential for Damaging Earthquake, Seismol. Res. Lett. 83(2), p. 250-260.

Oprsal, I., and Eisner, L., 2012 Using Cross Correlation to Indicate Induced Seismicity. 2012 Seismological Society of America Annual Meeting, 17-19 April, 2012 San Diego, California WO 2001/059481

Cesca, S et al. (2012). Discrimination of induced seismicity by full moment tensor inversion and decomposition, journal of seismology, p. 147-163.

**Claims**

1. A computer implemented, method for discriminating between natural and induced seismicity comprising a step of acquisition of human activity data and acquisition of seismicity data by a monitoring system for the same location and time period, and transforming the seismicity data and human activity data into the first time function and the second time function, respectively, **characterized in that** it comprises the step of

- determining normalized cross correlation, $NCC_{TF}$, between the first time function and the second time function,
- determining renormalized cross correlation, RNCC, on the basis of theoretically expected normalized cross correlation, $NCC_{TE}$, wherein $NCC_{TE}$ is computed under the presumption that the first time function and the second time function are mutually independent,
- assessing the statistical significance of RNCC,
- assessing the probability that seismicity is induced by the human activity on the basis of statistical significance of RNCC.

2. A computer implemented method for discriminating between natural and induced seismicity comprising a step of acquisition of human activity data and acquisition of seismicity data by a monitoring system for the same location and time period, and transforming the seismicity data and human activity data into the first time function and the second time function, respectively, **characterized in that** it comprises the step of

- obtaining the first effective time function and the second effective time function by mathematical transformation of the first time function and the second time function, respectively,
- determining the normalized cross correlation between the first effective time function and the second effective time function, $NCC_{ETF}$,
- assessing the statistical significance of $NCC_{ETF}$,
- assessing the probability that seismicity is induced by the human activity on the basis of statistical significance of $NCC_{ETF}$.

3. The method according to claim 2, **characterized in that** the mathematical transformation is selected from the following methods :

- transforming the time function into Fourier spectral domain by discrete Fourier transformation, multiplying the real and imaginary part of it by a filtering function and transforming the result back into time domain,
- subtracting the mean value from a function,
- high-pass, low-pass or band-pass filtrating of a function in the Fourier domain by arbitrary filter,
- low-pass filtrating of a function in the time domain by subtracting running window average, optionally using weighted window time span with weight dependent on time.

**Patentansprüche**

1. Ein computerimplementiertes Verfahren zur Unterscheidung zwischen natürlicher und induzierter Seismizität, umfassend einen Schritt des Erfassens von menschlichen Aktivitätsdaten und die Erfassung von Seismizitätsdaten durch ein Überwachungssystem für denselben Ort und Zeitperiode und das Umwandeln der Seismizitätsdaten und der menschlichen Aktivitätsdaten in die erste bzw. die zweite Zeitfunktion, **dadurch gekennzeichnet, dass** sie den Schritt umfasst:

- Bestimmung der normierten Kreuzkorrelation, $NCC_{TF}$, zwischen der ersten Zeitfunktion und der zweiten Zeitfunktion,
- Bestimmung der renormalisierten Kreuzkorrelation, RNCC, auf der Grundlage der theoretisch erwarteten normalisierten Kreuzkorrelation $NCC_{TE}$, wobei $NCC_{TE}$ unter der Annahme berechnet wird, dass die erste Zeitfunktion und die zweite Zeitfunktion voneinander unabhängig sind,
- Beurteilung der statistischen Signifikanz von RNCC,
- Beurteilung der Wahrscheinlichkeit, dass die Seismizität durch die menschliche Aktivität auf der Grundlage der statistischen Signifikanz von RNCC induziert wird.

2. Ein computerimplementiertes Verfahren zur Unterscheidung zwischen natürlicher und induzierter Seismizität, umfassend einen Schritt des Erfassens von menschlichen Aktivitätsdaten und die Erfassung von Seismizitätsdaten durch ein Überwachungssystem für denselben Ort und Zeitperiode und das Umwandeln der Seismizitätsdaten und der menschlichen Aktivitätsdaten jeweils in die erste und die zweite Zeitfunktion, **dadurch gekennzeichnet, dass** sie den Schritt umfasst:

- Erhalten der ersten effektiven Zeitfunktion und der zweiten effektiven Zeitfunktion durch mathematische Transformation der ersten Zeitfunktion bzw. der zweiten Zeitfunktion,

- Bestimmen der normierten Kreuzkorrelation zwischen der ersten effektiven Zeitfunktion und der zweiten effektiven Zeitfunktion $NCC_{ETF}$,
- Beurteilung der statistischen Signifikanz von $NCC_{ETF}$,
- Beurteilung der Wahrscheinlichkeit, dass die Seismizität durch die menschliche Aktivität auf der Grundlage der statistischen Signifikanz von $NCC_{ETF}$ induziert wird.

3. Verfahren nach Anspruch 2, **dadurch gekennzeichnet, dass** die mathematische Transformation aus den folgenden Methoden ausgewählt wird:

- Umwandlung der Zeitfunktion in die Fourier-Spektraldomäne durch diskrete Fourier-Transformation, Multiplikation des Real- und Imaginärteils mit einer Filterfunktion und Umwandlung des Ergebnisses zurück in den Zeitbereich,
- Subtrahieren des Mittelwertes aus einer Funktion,
- Hochpass-, Tiefpass- oder Bandpass-Filtration einer Funktion in der Fourier-Domäne durch beliebiges Filter,
- Tiefpaß-Filtration einer Funktion im Zeitbereich durch Subtraktion des Mittelwertes eines laufenden Fensters, optional mit gewichteter Fensterzeitspanne mit zeitabhängiger Gewichtung.

## Revendications

1. Procédé, mis en oeuvre par ordinateur, pour différencier entre une sismicité naturelle et une sismicité induite, comprenant une étape d'acquisition de données d'activité humaine et d'acquisition de données de sismicité, par un système de surveillance, pour le même emplacement et la même période de temps, et pour transformer les données de sismicité et les données d'activité humaine en la première fonction temporelle et la seconde fonction temporelle, respectivement, **caractérisé en ce qu'**il comprend les étapes ci-dessous consistant à :

- déterminer une corrélation croisée normalisée, $NCC_{TF}$, entre la première fonction temporelle et la seconde fonction temporelle ;
- déterminer une corrélation croisée re-normalisée, RNCC, sur la base d'une corrélation croisée normalisée théoriquement attendue, $NCC_{TE}$, dans lequel la corrélation $NCC_{TE}$ est calculée en présumant que la première fonction temporelle et la seconde fonction temporelle sont mutuellement indépendantes ;
- évaluer la signification statistique de la corrélation RNCC ;
- évaluer la probabilité que la sismicité soit induite par l'activité humaine, sur la base de la signification statistique de la corrélation RNCC.

2. Procédé, mis en oeuvre par ordinateur, pour différencier entre une sismicité naturelle et une sismicité induite, comprenant une étape d'acquisition de données d'activité humaine et d'acquisition de données de sismicité, par un système de surveillance, pour le même emplacement et la même période de temps, et pour transformer les données de sismicité et les données d'activité humaine en la première fonction temporelle et la seconde fonction temporelle, respectivement, **caractérisé en ce qu'**il comprend les étapes ci-dessous consistant à :

- obtenir la première fonction temporelle efficace et la seconde fonction temporelle efficace, par une transformation mathématique de la première fonction temporelle et de la seconde fonction temporelle, respectivement ;
- déterminer la corrélation croisée normalisée entre la première fonction temporelle efficace et la seconde fonction temporelle efficace, $NCC_{ETF}$ ;
- évaluer la signification statistique de la corrélation $NCC_{ETF}$ ;
- évaluer la probabilité que la sismicité soit induite par l'activité humaine, sur la base de la signification statistique de la corrélation $NCC_{ETF}$.

3. Procédé selon la revendication 2, **caractérisé en ce que** la transformation mathématique est sélectionnée parmi les procédés suivants consistant à :

- transformer la fonction temporelle dans le domaine spectral de Fourier, par une transformée de Fourier discrète, multiplier sa partie réelle et sa partie imaginaire par une fonction de filtrage, et retransformer le résultat dans le domaine temporel ;
- soustraire la valeur moyenne d'une fonction ;
- mettre en oeuvre un filtrage passe-haut, passe-bas ou passe-bande d'une fonction dans le domaine de Fourier, par un filtre arbitraire ;
- mettre en oeuvre un filtrage passe-bas d'une fonction dans le domaine temporel, en soustrayant une moyenne de fenêtre d'exécution, facultativement en utilisant un intervalle de temps de fenêtre pondérée dont la pondération est dépendante du temps.

## Fig. 1

**Fig. 2**

## Fig. 3

## Fig. 4

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2001059481 A

**Non-patent literature cited in the description**

- **HEALY, J.H. ; W.W. RUBY ; D.T. GRIGGS ; C.B. RALEIGH.** The Denver Earthquakes. *Science,* 1968, vol. 161 (3848), 1301-1310
- **HORTON, S.** Disposal of Hydrofracking Waste Fluid by Injection into Subsurface Aquifers Triggers Earthquake Swarm in Central Arkansas with Potential for Damaging Earthquake. *Seismol. Res. Lett.,* 2012, vol. 83 (2), 250-260
- **OPRSAL, I. ; EISNER, L.** 2012 Using Cross Correlation to Indicate Induced Seismicity. *2012 Seismological Society of America Annual Meeting,* 17 April 2012
- **CESCA, S et al.** Discrimination of induced seismicity by full moment tensor inversion and decomposition. *journal of seismology,* 2012, 147-163